# EUROPÄISCHE PATENTSCHRIFT

(11) **EP 0 417 548 B1**
(45) Veröffentlichungstag und Bekanntmachung des Hinweises auf die Patenterteilung: **26.04.1995**
(21) Anmeldenummer: 90116592.8
(22) Anmeldetag: 30.08.1990
(51) Int. Cl.: H04B 10/06

(54) **Schaltung eines optoelektronischen Empfängers**
Optoelectronic receiver circuit
Circuit d'un récepteur optoélectronique

(30) Priorität: 12.09.1989 DE 3930415
(43) Veröffentlichungstag der Anmeldung: 20.03.1991
(73) Patentinhaber: Günter, Martin, Dipl.-Ing., D-76131 Karlsruhe (DE)
(72) Erfinder: Günter, Martin, Dipl.-Ing., D-7505 Ettlingenweier (DE); Etzkorn, Hans-Peter, Dipl.-Ing., D-7520 Bruchsal 7 (DE)
(74) Vertreter: Trappenberg, Hans

(56) Entgegenhaltungen:
- EP-A- 0 304 997
- DE-A- 3 316 683
- PATENT ABSTRACTS OF JAPAN vol. 8, no. 176 (E-260)(1613) 14. August 1984
- PATENT ABSTRACTS OF JAPAN vol. 13, no. 298 (E-784)(3646) 10. Juli 1989
- PATENT ABSTRACTS OF JAPAN vol. 6, no. 91 (E-109)(969) 28. Mai 1982
- PATENT ABSTRACTS OF JAPAN vol. 10, no. 175 (E-413)(2231) 20. Juni 1986

## Beschreibung

Die Erfindung betrifft eine Schaltung zum Einstellen des Arbeitspunktes des Nutzsignal-Fotosensors bei einem optoelektronischen Empfänger von Wechsellicht-Nutzsignalen durch Anlegen einer Vorspannung an den Nutzsignal-Fotosensor.

Ihrer vielen Vorzüge wegen wird die optische Signalübertragung in stets steigendem Maße eingesetzt. So findet auch optische Signalübertragung zwischen sich bewegenden und festen Objekten statt, beispielsweise zur Lenkung des Verkehrsflußes. Hierbei ist am bewegten Objekt ein Sender, im allgemeinen ein Infrarotsender, angebracht, der auf entsprechende fest installierte Empfänger einwirkt. Kann der am bewegten Objekt angeordnete Sender noch aus dem Stromnetz dieses bewegten Objektes versorgt werden, so entfällt im allgemeinen die Möglichkeit der Stromversorgung der fest installierten Empfänger durch eine allgemeine Stromversorgung. Zu beachten ist hierbei, daß derartige Einrichtungen vollkommen unabhängig von der allgemeinen Stromversorgung sein müssen, um auch bei einem, wenn auch nur kurzzeitigen Ausfall dieser Stromversorgung, noch betriebsbereit zu sein. Fällt bei den Sendern beim bewegten Objekt die Stromversorgung aus, ist im allgemeinen das Objekt auch nicht mehr bewegbar, beziehungsweise es entfällt dann auch die sonst unbedingt notwendige Meldung über den festen Empfänger. Damit ergibt sich also die Notwendigkeit, die fest installierten Empfänger hinsichtlich ihrer Stromversorgung autark auszubilden, sie also mit Primärelementen auszustatten. In neuerer Zeit wurden auch derartige Primärelemente unter Verwendung von Lithium entwickelt, die eine außerordentlich hohe Lebensdauer, also eine sehr geringe Selbstentladung aufweisen. Durchaus können mit diesen Primärelementen Betriebszeiten von einigen Jahrzehnten erreicht werden. Voraussetzung hierfür ist allerdings ein entsprechend geringer Stromverbrauch, der bei diesen optischen Empfangsgeräten bei einigen Mikroampere liegen soll.

Dies wiederum setzt eine geeignete, trotz des gewünschten geringen Stromverbrauchs, sehr sensitive Empfängerschaltung mit entsprechenden Fotosensoren voraus.

Als Fotosensoren können alle derzeit bekannten optoelektronischen Bauelemente, also Fotowiderstände, Fotodioden, (Fotoelemente, Solarzellen) oder Fototransistoren verwendet werden. Einsatz finden bevorzugt die aktiven Fotosensoren, also Fotodioden oder Fototransistoren. Diese Fotosensoren müssen allerdings durch eine geeignete stromdurchflossene Schaltung auf ihren optimalen Arbeitspunkt geführt werden, was bei den bisher bekannten Schaltungen einen steten Stromverbrauch zur Folge hat. Dieser Dauer-Stromverbrauch geht selbstverständlich bei den oben beschriebenen autarken optoelektronischen Empfängern zu Lasten der Batteriekapazität, so daß deren immanente Langzeit-Lebensdauer nicht ausgenutzt werden kann.

Eine erste Aufgabe der Erfindung ist es damit, eine Möglichkeit anzugeben, wie diese Dauerbelastung der Batterie als Folge der stets notwendigen Vorspannung an dem Fotosensor vermieden werden kann.

Auf derartige optoelektronische Empfänger trifft, insbesondere dann, wenn sie beispielsweise zum Lenken des Verkehrsflusses im Freien aufgestellt sind, selbstverständlich auch Störlicht, im allgemeinen als Gleichlicht, beispielsweise durch Sonneneinstrahlung, Autoscheinwerfer, Straßenbeleuchtung oder ähnliches. Eine Schaltungsanordnung zur Unterdrückung elektromagnetischer Störungen in optischen Empfängern ist aus DE-A-3 316 683 bekannt. Damit ergibt sich als zweite Aufgabe die Kompensation dieser durch das Störlicht hervorgerufenen Störsignale.

Diese gestellten Aufgaben werden in erfindungsgemäßer Weise dadurch gelöst, daß dem Nutzsignal-Fotosensor über einen Gleichstrompfad (Induktivität) ein weiterer die gleichen Signale empfangender Störsignal-Fotosensor antiparallel zugeschaltet ist.

Der antiparallel zugeschaltete Störsignal-Fotosensor gibt beim Empfang von Gleichlicht über die zwischengeschaltete Induktivität eine Gleich-Vorspannung an den Nutzsignal-Fotosensor ab, der den Arbeitspunkt dieses Nutzsignal-Fotosensors zur sensitiven Seite hin verschiebt. Dadurch erübrigt sich eine separate durch die Batterie bereitzustellende und sie belastende Vorspannung für diesen Nutzsignal-Fotosensor. Gleichzeitig wird jedoch auch das Gleichlicht-Störsignal von diesem Nutzsignal-Fotosensor ferngehalten beziehungsweise durch die Antiparallelschaltung des von dem Störsignal-Fotosensor ausgehenden Signals kompensiert, so daß es sich bei dem Nutzsignal nicht mehr bemerkbar macht. Gleiche Verhältnisse ergeben sich selbstverständlich auch dann, wenn der Träger des Nutzsignals auf die beiden Fotosensoren auftrifft, da dessen Gleichlichtanteil wiederum dazu führt, daß der Arbeitspunkt, hervorgerufen durch die im Störsignal-Fotosensor entstehende Spannung, in den sensitiven Bereich verschoben wird. Um dieses Funktionsschema auch bei teilweiser Abschattung des Störsignal-Fotosensors beizubehalten, wird nach der Erfindung weiterhin vorgeschlagen, daß der Störsignal-Fotosensor bei jeweils gleichem Gleichlichtanteil einen zumindest gleichen Fotostrom liefert als der Nutzsignal-Fotosensor.

Da das Gleichlicht-Störsignal nicht beeinflußt werden kann, also auch davon ausgegangen werden muß, daß dieses Störlicht beispielsweise durch Ausschaltvorgänge, Wechsellichtanteile enthält, wird zweckmäßigerweise zu dem Störsignal-Fotosensor ein Kondensator parallel geschaltet, der diese Wechsellichtkomponenten kurzschließt.

Durch die erfindungsgemäße Schaltungsanordnung ist auf jeden Fall erreicht, daß sich Gleichlicht-Störanteile bei der Verarbeitung des Nutzsignals nicht mehr störend bemerkbar machen und insbesondere, daß keine durch die Batterie zu liefernde Vorspannung für den Betrieb des Nutzsignal-Fotosensors benötigt wird.

Auf der Zeichnung ist die Erfindung anhand von Schaltschemata dargestellt und zwar zeigen
- Fig. 1: die Schaltung in vereinfachter Darstellungsweise und
- Fig. 2: die Ersatzschaltung hierzu.

Einem Nutzsignal-Fotosensor (D1) ist über eine Induktivität (L1) ein Störsignal-Fotosensor (D2) antiparallel zugeschaltet. Dem Störlicht-Fotosensor (D2) ist parallel ein Kondensator (C2) zugeordnet. Das Nutzsignal wird über den Kondensator (C1) ausgekoppelt.

Beim Eintreffen von Gleichlicht-Störsignalen werden beide Fotosensoren (D1,D2) von diesem Gleichlicht beaufschlagt und geben hierbei einen entsprechenden Fotostrom ab. Da erfindungsgemäß der Störsignal-Fotosensor (D2) einen zumindest gleichhohen Fotostrom abgeben soll als der Nutzsignal-Fotosensor (D1), ergibt sich an diesem Nutzsignal-Fotosensor (D1) eine ihn zu seinem sensitiven Arbeitspunkt hinführende Vorspannung. Etwa vorhandene Wechsellicht-Störanteile werden hierbei durch den parallel zum Störsignal-Fotosensor (D2) geschalteten Kondensator (C2) kurzgeschlossen. Beim Eintreffen von Nutzsignalen werden diese Wechsellichtsignale durch die Induktivität (L1) von dem Störsignal-Fotosensor (D2) und damit auch von dem Kondensator (C2) ferngehalten, stehen also zur Weiterverarbeitung zur Verfügung. Am Störsignal-Fotosensor (D2) hingegen werden diese Wechsellicht- -Nutzsignale durch den Kondensator (C2) kurzgeschlossen.

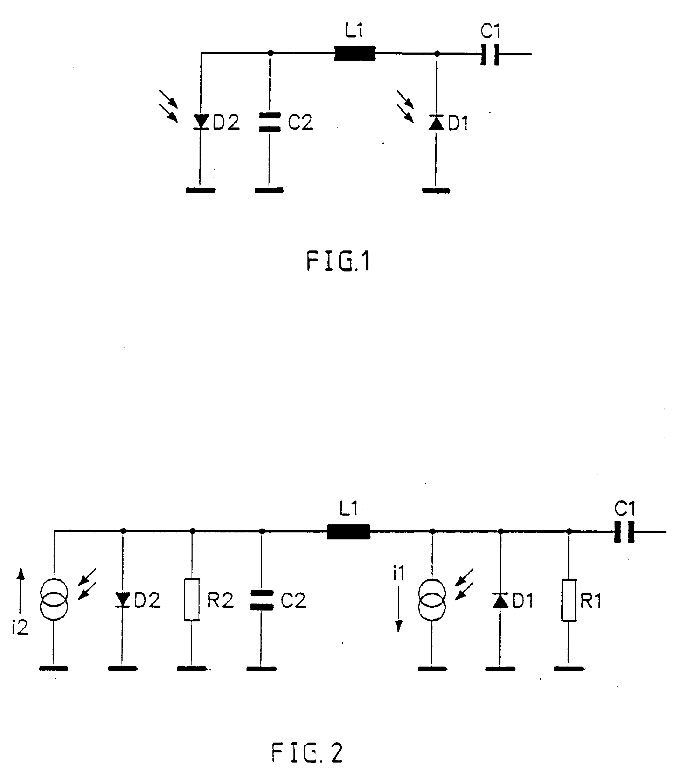

Fig. 2 zeigt die Ersatzschaltung zu Fig. 1. Hierin ist der Fotosensor (D2) durch die Diode (D2) und den Fotostromgenerator mit dem Fotostrom (i2) dargestellt, der zugehörige Widerstand mit (R2) und parallel hierzu auch wiederum der Kondensator (C2) angeordnet. Analog hierzu ist der Fotosensor (D1) dargestellt durch die Diode (D1) den Fotostromgenerator (i1) und wiederum den zugehörigen Widerstand (R1).
Für diese Ersatzschaltung gilt
i1 = S1 * Ev
i2 = S2 * Ev
S2 >= S1
wobei
Ev = Beleuchtungsstärke
S1, S2 = Empfindlichkeiten der Fotosensoren
ist.

## Patentansprüche

1. Schaltung zum Einstellen des Arbeitspunktes des Nutzsignal-Fotosensors bei einem optoelektronischen Empfänger von Wechsellicht-Nutzsignalen durch Anlegen einer Vorspannung an den Nutzsignal-Fotosensor,
dadurch gekennzeichnet,
daß dem Nutzsignal-Fotosensor (D1) über einen Gleichstrompfad (Induktivität L1) ein weiterer die gleichen Signale empfangender Störsignal-Fotosensor (D2) antiparallel zugeschaltet ist.

2. Schaltung nach Anspruch 1,
dadurch gekennzeichnet,
daß der Störsignal-Fotosensor (D2) bei jeweils gleichem Gleichlichtanteil einen zumindest gleichen Fotostrom liefert wie der Nutzsignal-Fotosensor (D1).

3. Schaltung nach Anspruch 1 oder 2,
dadurch gekennzeichnet,
daß ein Kondensator (C2) parallel zum Störsignal-Fotosensor (D2) geschaltet ist.

4. Schaltung nach Anspruch 1 oder 2,
dadurch gekennzeichnet,
daß der Gleichstrompfad ( die Induktivität L1) ein auf die Wechsellichtfrequenz abgestimmter Schwingkreis ist.

## Claims

1. A circuit for setting the operating point of the useful signal photosensor in an opto-electronic receiver of alternating-light useful signals by the application of a bias voltage to the useful signal photosensor characterised in that connected in anti-parallel relationship with the useful signal photosensor (D1) by way of a direct current path (inductor L1) is a further interference signal photosensor (D2) which receives the same signals.

2. A circuit according to claim 1 characterised in that with the same respective constant light component the interference signal photosensor (D2) supplies a photoelectric current which is at least the same as the useful signal photosensor (D1).

3. A circuit according to claim 1 or claim 2 characterised in that a capacitor (C2) is connected in parallel with the interference signal photosensor (D2).

4. A circuit according to claim 1 or claim 2 characterised in that the direct current path (the inductor L1) is an oscillator circuit which is tuned to the alternating-light frequency.

## Revendications

1. Circuit pour régler le point de travail du photodétecteur de signal utile pour un récepteur optoélectronique de signaux utiles de lumière alternante, en appliquant une tension de polarisation au photodétecteur de signal utile, **caractérisé** en ce qu'un photodétecteur supplémentaire, à savoir un photodétecteur de signal parasite (D2) recevant les mêmes signaux, est relié en montage antiparallèle au photodétecteur de signal utile (D1) par l'intermédiaire d'un trajet de courant continu (inductance L1).

2. Circuit selon la revendication 1, **caractérisé** en ce que le photodétecteur de signal parasite (D2) délivre, pour une part de lumière constante chaque fois identique, un courant photoélectrique au moins égal à celui délivré par le photodétecteur de signal utile (D1).

3. Circuit selon la revendication 1 ou 2, **caractérisé** en ce qu'un condensateur (C2) est monté en parallèle avec le photodétecteur de signal parasite (D2).

4. Circuit selon la revendication 1 ou 2, **caractérisé** en ce que le trajet de courant continu (l'inductance L1) est un circuit oscillant accordé à la fréquence de la lumière alternante.
